# EUROPEAN PATENT APPLICATION

(11) **EP 4 509 307 A1**
(43) Date of publication of application: **19.02.2025**
(21) Application number: 23191591.9
(22) Date of filing: 16.08.2023
(51) Int. Cl.: B32B 17/10

(54) **INTERLAYER FILM FOR LAMINATED GLASS COMPRISING BIOBASED PLASTICIZERS**

(71) Applicant: Kuraray Europe GmbH, 65795 Hattersheim (DE)
(72) Inventor: Flötotto, Henrik, 40597 Düsseldorf (DE)
(74) Representative: Janßen, Christian Oliver

(57) **Abstract**

The present invention relates to an interlayer film for laminated glass comprising at least one polyvinyl acetal and at least one aliphatic carboxylic acid and/or at least one aliphatic ester, characterized in that the aliphatic carboxylic acid and/or the aliphatic ester comprises a biobased carbon content measured according to ASTM D6866 - 22 from 1.0 to 100%.

## Description

The present invention relates to an interlayer film for laminated glass comprising at least one polyvinyl acetal and at least one aliphatic carboxylic acid and/or at least one aliphatic ester, characterized in that the aliphatic carboxylic acid and/or the aliphatic ester comprises a biobased carbon content measured according to ASTM D6866 - 22 from 1.0 to 100%.

It is well known that polyvinyl acetals are extruded into films used as interlayers in laminated glasses, preferably for automotive glass, architectural glass for the construction sector and bulletproof glass. The polyvinyl acetal usually comprises a plasticizer to achieve a balance of mechanical properties to meet subsequent handling and performance requirements. Depending on the application, the plasticizer content can be as high as 45 % by weight of the interlayer film containing polyvinyl acetal. While many different plasticizers were previously proposed for use in combination with polyvinyl acetals, there has been a continuous effort to discover plasticizers that combine excellent performance characteristics, low cost and applicability to a wide range of glazing materials. However, these plasticizers are currently based on fossil raw materials.

The use of plasticizers based on fossil raw materials comes with many disadvantages. On the one hand, fossil raw materials are finite, which means that their availability is likely to decline in the future, which is usually accompanied by rising prices. On the other hand, the use of plasticizers based on fossil raw materials contributes to an increase in greenhouse gas emissions. Another disadvantage is that plasticizers based on fossil raw materials are often more difficult to recycle, are not available regionally and therefore have to be transported over long distances, which results in additional greenhouse gas emissions. It would therefore be desirable to use plasticizers that are produced on the basis of biobased raw materials in the sense of a sustainable circular economy.

Various processes are known for the production of plasticizers based on biobased raw materials. These include, for example, the epoxidation of vegetable oils such as rapeseed oil, sunflower oil or soybean oil, the fermentation of sugars and the esterification of fatty acids with alcohols.

Biobased raw materials are usually plant residues, which often come from different sources and can therefore also have various impurities that cannot always be completely removed. These impurities can also include heavy metals and pesticides. Usually, the plant residues are decomposed under very harsh conditions, resulting in the formation of undesirable by-products. These by-products are usually insoluble and intensely colored. These by-products cannot be completely removed with reasonable effort, so a small amount always remains.

For example, EP3333219A1 discloses the use of at least partially bio-based plasticizer mixtures for polyvinyl butyral. Furthermore, EP4157826A1 discloses various dialkyl esters of 2,4-furanedicarboxylic acid, which can be obtained on the basis of renewable raw materials and can be used for plasticizing polyvinyl butyral.

Although the use of biobased plasticizers in combination with polyvinyl butyrals has been described in the prior art, the use of biobased plasticizers in interlayer films for laminated glass comprising polyvinyl acetals is not known, since it can be assumed that the impurities or by-products contained in the biobased plasticizers lead to optical quality losses that make it impossible to use them as interlayer films for laminated glass.

Accordingly, it was an object of the present invention to enable the use of biobased plasticizers in interlayer films for laminated glass comprising polyvinyl acetal.

It has now been surprisingly found that biobased aliphatic carboxylic acids and/or their aliphatic esters can be used as plasticizers in interlayer films for laminated glass comprising polyvinyl acetal without causing unacceptable optical quality losses.

It can be assumed that the coloration occurring in biobased plasticizers results at least in part from non-covalent interactions of aromatic ring systems with heavy metals, which originate from impurities in the plant residues. Heavy metals may either be of natural origin or may be emitted into the environment as a result of human activities. In agriculture, for example, various copper, iron or zinc compounds are used as pesticides.

Accordingly, a first aspect of the present invention relates to an interlayer film for laminated glass comprising at least one polyvinyl acetal, at least one aliphatic carboxylic acid and/or at least one aliphatic ester, characterized in that the aliphatic carboxylic acid and/or the aliphatic ester comprises a biobased carbon content measured according to ASTM D6866 - 22 from 1 to 100%.

The term "biobased carbon content" is to be understood according to the definition provided in standard ASTM D6866 - 22.

Preferably, the biobased carbon content is more than 10%, or more than 20%, or more than 30%, or more than 40%, or more than 50%, or more than 60%, or more than 70%, or more than 80%, or more than 90% according to ASTM D6866 - 22. More preferably, at least the aliphatic carboxylic acid or the aliphatic ester comprises a biobased carbon content measured according to ASTM D6866 - 22 from 1.0 to 100%.

Most preferably, at least the aliphatic alcohol moiety of the aliphatic ester comprises a biobased carbon content measured according to ASTM D6866 - 22 from 1.0 to 100%.

Aliphatic carboxylic acids and/or aliphatic esters may have a plasticizing effect on the interlayer film for laminated glass comprising at least one polyvinyl acetal and can therefore also be referred to as "plasticizers" below.

Suitable aliphatic carboxylic acids are selected from monocarboxylic acids, dicarboxylic acids or tricarboxylic acids. The carbon comprised in the aliphatic carboxylic acids can either be based on fossil raw materials or biobased raw materials. Preferably, the carbon comprised in the aliphatic carboxylic acids result from a mixture of biobased and fossil based raw materials. More preferably the carbon comprised in the aliphatic carboxylic acids is based on biobased raw materials. The aliphatic carboxylic acids may either be branched or linear having 3 to 20 carbon atoms.

Examples of aliphatic carboxylic acids are propionic acid, 2-hydroxypropanoic acid, 3-hydroxypropionic acid, n-butyric acid, isobutyric acid, 2-hydroxybutanedioic acid, butanedioic acid, 2-methylbutyric acid, 3-methylbutyric acid, levulinic acid, valeric acid, 2-methylpentanoic acid, n-hexanoic acid, hexanedioic acid, 2-ethylbutyric acid, n-heptanoic acid, 2-methylhexanoic acid, 2-ethylhexanoic acid, n-nonanoic acid, azelaic acid, 2-methyloctanoic acid, 7-methyloctanoic acid, 3,5,5-trimethylhexanoic acid, decanoic acid, decandioic acid, tetradecanoic acid, or citric acid.

Suitable aliphatic alcohols can be selected from mono alcohols, di alcohols, tri alcohols, polyols, ether diols, or higher glycols. The carbon comprised in the aliphatic alcohols can either be based on fossil raw materials or biobased raw materials. Preferably, the carbon comprised in the aliphatic alcohols result from a mixture of biobased and fossil based raw materials. More preferably the carbon comprised in the aliphatic alcohols is based on biobased raw materials. The aliphatic alcohols may either be branched or linear having 1 to 15 carbon atoms. Examples of the aliphatic alcohols are methanol, ethanol, 1,2-propanediol, 1,3-propanediol, glycerol, n-butanol, 2-methylbutan-2-ol, 1,6-hexanediol, diethylene glycol, triethylene glycol, tetraethylene glycol, propylene glycol or butyldiglycol.

Suitable aliphatic esters can be obtained by esterification of an aliphatic carboxylic acid with an aliphatic alcohol. The carbon comprised in the aliphatic esters can either be based on fossil raw materials or biobased raw materials. Preferably, the carbon comprised in the aliphatic esters result from a mixture of biobased and fossil based raw materials. More preferably the carbon comprised in the aliphatic esters is based on biobased raw materials. Examples of aliphatic esters are triethylene glycol bis(2-ethylhexanoate), bis[2-(2-butoxyethoxy)ethyl] adipate, triethylhexanoin, 2-hydroxypropyl 2-ethylhexanoate, dibutyl succinate, tetraethylene glycol diheptanoate, triethylene glycol bis(2-ethylbutyrate), triethylene glycol diheptanoate or tetraethylene glycol di-2-ethylhexanoate.

Preferably, the aliphatic carboxylic acid and/or the aliphatic ester is comprised in the interlayer film in an amount from 1 to 45 wt%. More preferably, the aliphatic carboxylic acid and/or the aliphatic carboxylic acid ester present in the interlayer film is 10 to 45 wt% and even more preferably 15 to 45 wt% and most preferably 20 to 45 wt%.

Preferably, the polyvinyl acetal comprised in the interlayer film has a degree of acetalization between 60 to 95 wt%, a degree of acetylation between 0.1 to 15 wt% and a degree of polymerization between 200 to 4500.

The interlayer film preferably comprises polyvinyl acetal, which can be produced by acetalization of polyvinyl alcohol or ethylene vinyl alcohol copolymer.

The degree of polymerization of the polyvinyl alcohol is preferably between 200 and 4500. Also preferably, the degree of polymerization is 900 or more, more preferably 1700 or more, or 2400 or more, or 3100 or more, or 3800 or more, or 4500 or more.

The degree of polymerization of the polyvinyl alcohol is determined in accordance with JIS K 6726 (1994).

The interlayer film can comprise more than one polyvinyl acetal, each having a different polyvinyl alcohol content, degree of acetalization, residual acetate content, ethylene proportion, molecular weight and/or different chain lengths of the aldehyde of the acetal groups.

The polyvinyl acetate content of the polyvinyl acetal used in the interlayer film may be between 0.1 to 15 % by weight, preferably 0.1 to 2 % by weight, or 4 to 11 % by weight.

The polyvinyl alcohol content of the polyvinyl acetal used in the interlayer film may be between 6 to 26 % by weight, 8 to 24 % by weight, 10 to 22 % by weight, 11 to 21 % by weight, 14 to 20 % by weight, 16 to 19 % by weight and preferably between 16 to 21 % by weight or 10 to 16 % by weight.

The polyvinyl alcohol content and polyvinyl acetate content of polyvinyl acetal can be determined in accordance with ASTM D 1396-92. The degree of acetalization can be calculated as the remaining portion from the sum of polyvinyl alcohol content and polyvinyl acetate content determined in accordance with ASTM D 1396-92 needed to make one hundred. Conversion from % by weight into mol % is achieved by formulas known to the person skilled in the art.

The polyvinyl acetal content of the polyvinyl acetal used in the interlayer film may be between 60 to 95 % by weight. Preferably between 65 to 90 % by weight, more preferably between 70 to 85 % by weight and most preferably between 75 to 85 % by weight.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinyl acetal used in accordance with the invention results in particular from the reaction of at least one polyvinyl alcohol with one or more aliphatic unbranched keto-compounds containing 2 to 10 carbon atoms. To this end, n-butyraldehyde is preferably used.

Preferably the polyvinyl acetal comprised in the interlayer film is a polyvinyl butyral.

Also preferably, the interlayer film comprises at least one first interlayer film and at least one second interlayer film, characterized in that the at least second interlayer film comprises more aliphatic carboxylic acid and/or aliphatic ester than the at least first interlayer film.

Interlayer films can preferably be produced by combining individually extruded interlayer films or preferably by co-extrusion of the interlayer films. The interlayer films, prior to the combination with one another, may contain identical or different plasticizers in an identical or different quantity. The use of identical plasticizers is preferred, wherein the composition of plasticizer mixtures in the interlayer films may change slightly on account of migration.

Preferably, the interlayer films are generally produced by extrusion or co-extrusion, moreover under certain conditions (melt pressure, melt temperature and die temperature) so as to obtain a melt fracture surface, i.e. a stochastic surface roughness.

Alternatively, an interlayer film already produced in accordance with the invention can be embossed with a non-stochastic, regular roughness by means of an embossing process between at least one pair of rolls. Embossed films generally have improved deaeration behavior during the laminated glass production and are used preferably in the automotive field.

Interlayer films preferably have, independently of the production method, a surface structure applied on one side or more preferably on both sides, said surface structure having a roughness Rz from 15 to 150 µm, preferably Rz from 15 to 100 µm, more preferably Rz from 20 to 80 µm.

The surface parameter Rz can be determined in accordance with DIN EN ISO 4287 (2010).

Interlayer films preferably have a total thickness from 0.01 to 2.00 mm, more preferably 0.10 to 1.5 mm, and most preferably 0.38 to 1.2 mm.

Preferably, the interlayer film comprises in addition to the biobased aliphatic carboxylic acid and/or aliphatic ester a further aliphatic ester which is not biobased.

More preferably, the not biobased aliphatic ester is triethylene glycol bis(2-ethylhexanoate).

Preferably, the interlayer film has a wedge shape as a cross-sectional shape.

If the interlayer film comprises more than one layer film at least one of the layers of the interlayer film has a wedge shape as a cross-sectional shape. Preferably, all layers of the interlayer film has a wedge shape as a cross-sectional shape.

The wedge angle θ of the interlayer film is between 0.1 to 1.0 mrad and preferably between 0.2 to 0.8 mrad.

Interlayer films having a wedge shape as a cross-sectional shape can be used in motor vehicle windscreens for HUD displays.

Preferably, the interlayer film wherein the at least one aliphatic carboxylic acid and/or at least one aliphatic ester, characterized in that the aliphatic carboxylic acid and/or the aliphatic ester comprising a biobased carbon content comprises heavy metal ions in a concentration of 0.001 ppm or more and 100 ppm or less.

Preferably, the concentration of heavy metal ions comprised in the interlayer film is between 0.01 to 100 ppm, also preferably between 0.1 to 100 ppm and also preferably between 1 to 100 ppm.

More preferably, the concentration of heavy metal ions comprised in the interlayer film is less than 10 ppm, also preferably less than 5 ppm, also preferably less than 1 ppm, also preferably less than 1 ppm, also preferably less than 0.1 ppm and also preferably less than 0.01 ppm.

Most preferably, the concentration of heavy metal ions comprised in the interlayer film is between 0.001 to 10 ppm, also preferably 0.01 to 10 ppm, also preferably 0.1 to 10 ppm and also preferably 1 to 10 ppm.

The heavy metal ions comprised in the interlayer film can be titanium, vanadium, chromium, manganese, iron, nickel, copper, zinc, gallium, germanium, arsenic, zirconium, niobium, molybdenum, technetium, ruthenium, rhodium, palladium, silver, cadmium, indium, tin, antimony, lutetium, hafnium, tantalum, tungsten, rhenium, osmium, iridium, platinum, gold, mercury, thallium, lead, bismuth, polonium, lanthanum, cerium, praseodymium, neodymium, promethium, samarium, europium, gadolinium, terbium, dysprosium, holmium, erbium, thulium, ytterbium and lutetium.

Analysis of heavy metal ion content can be performed by atomic absorption spectroscopy (AAS).

Another aspect of the present invention is the use of the interlayer film described above for the manufacture of laminated glass.

Yet another aspect of the present invention concerns a laminated glass comprising the interlayer film according to the invention.

The laminated glass according to the invention may be used for architectural glazing, or in the mobility sector, as for windshields, glass roofs or side glazing.

Additionally, the interlayer film contain further additives, such as residual quantities of water, adhesion regulators, optical brighteners or fluorescent additives, colorants, processing aids, inorganic or organic nanoparticles, pyrogenic silicic acid and/or surface active substances.

## Claims

1. An interlayer film for laminated glass comprising at least one polyvinyl acetal and at least one aliphatic carboxylic acid and/or at least one aliphatic ester, **characterized in that** the aliphatic carboxylic acid and/or the aliphatic ester comprises a biobased carbon content measured according to ASTM D6866 - 22 from 1.0 to 100%.

2. The interlayer film according to claim 1 wherein at least the carboxylic acid or the aliphatic ester comprises a biobased carbon content measured according to ASTM D6866 - 22 from 1.0 to 100%.

3. The interlayer film according to any one of claim 1 to 2 wherein at least the aliphatic alcohol moiety of the aliphatic ester comprises a biobased carbon content measured according to ASTM D6866 - 22 from 1.0 to 100%.

4. The interlayer film according to any one of claim 1 to 3 wherein at least the aliphatic carboxylic acid and/or the aliphatic ester is comprised in the interlayer film in an amount from 1 to 45 wt%.

5. The interlayer film according to any one of claim 1 to 4 wherein the polyvinyl acetal has a degree of acetalization between 60 to 95 wt%, a degree of acetylation between 0.1 to 15 wt% and a degree of polymerization between 200 to 4500.

6. The interlayer film according to any one of claim 1 to 5 wherein the polyvinyl acetal is a polyvinyl butyral.

7. The interlayer film according to any one of claim 1 to 6 wherein the interlayer film comprises at least one first interlayer film and at least one second interlayer film, **characterized in that** the at least second interlayer film comprises more aliphatic carboxylic acid and/or aliphatic ester than the at least first interlayer film.

8. The interlayer film according to any one of claim 1 to 7 wherein the interlayer film comprises in addition to the biobased aliphatic carboxylic acid and/or aliphatic ester a further aliphatic ester which is not biobased.

9. The interlayer film according to claim 8 wherein the not biobased aliphatic ester is triethylene glycol bis(2-ethylhexanoate).

10. The interlayer film according to any one of claim 1 to 9 wherein the interlayer film has a wedge shape as a cross-sectional shape.

11. The interlayer film according to any one of claim 1 to 10 wherein the at least one aliphatic carboxylic acid and/or at least one aliphatic ester, **characterized in that** the aliphatic carboxylic acid and/or the aliphatic ester comprising a biobased carbon content comprises heavy metal ions in a concentration of 0.001 ppm or more and 100 ppm or less.

12. Use of the interlayer film according to any one of claim 1 to 11 for the manufacture of laminated glass.

13. A laminated glass comprising the interlayer film according to any one of claim 1 to 12.
